# FASCICULE DE BREVET EUROPEEN

(11) **EP 0 718 165 B1**
(45) Date de publication et mention de la délivrance du brevet: **16.09.1998**
(21) Numéro de dépôt: 95120017.9
(22) Date de dépôt: 19.12.1995
(51) Int. Cl.: B60S 1/02, B60S 1/54, B60H 1/00

(54) **Dispositif de désembuage des vitres d'un véhicule automobile**
Vorrichtung zur Entnebelung von Fahrzeugscheiben
Device for demisting vehicle windows

(30) Priorité: 23.12.1994 FR 9415614
(43) Date de publication de la demande: 26.06.1996
(73) Titulaire: VALEO CLIMATISATION, 78321 La Verrière (FR)
(72) Inventeur: Lang, Michael, F-75007 Paris (FR)
(74) Mandataire: Gamonal, Didier

(56) Documents cités:
- EP-A- 0 316 545
- GB-A- 2 168 506
- US-A- 4 730 662
- PATENT ABSTRACTS OF JAPAN vol. 12 no. 131 (M-688) & JP-A-62 253515 (DIESEL KIKI CO LTD)

## Description

L'invention concerne un dispositif de désembuage des vitres d'un véhicule automobile.

Dans le domaine de l'automobile, on connaît déjà un premier type de dispositif de désembuage, dans lequel une branche de désembuage spécifique, qui fait partie de l'installation de chauffage et/ou climatisation du véhicule, autorise le désembuage du pare-brise du véhicule par simple actionnement d'un bouton de commande logé dans la planche de bord dudit véhicule. Lorsque l'utilisateur estime qu'il n'a plus besoin de désembuer le pare-brise de son véhicule, il ne lui reste plus qu'à repositionner le bouton de commande dans son état initial.

Dans les installations équipés d'actionneurs de volets électromécaniques ou pneumatiques, cette solution permet de mettre en veille les réglages de l'installation de chauffage et/ou climatisation, afin de les restaurer à la fin du désembuage.

Une telle solution est certes pratique, dans la mesure où elle évite à l'utilisateur de refaire ses réglages à chaque fois qu'il souhaite désembuer son pare-brise, mais le désembuage ne peut commencer que sur ordre de l'un des passagers avant du véhicule après détection de buée. Le seul temps gagné est celui nécessaire aux réglages de l'installation de chauffage et/ou climatisation. Par ailleurs, ce dispositif de désembuage ne peut fonctionner qu'en tout ou rien puisque les caractéristiques de l'air de désembuage ne peuvent pas être modifiées.

On connaît également, dans ce même domaine de l'automobile, un second type de dispositif de désembuage dans lequel un capteur de température, généralement collé sur le parebrise, délivre des mesures de température à des moyens de traitement, lesquels sont aptes à comparer la mesure a des données de seuil mémorisées dans une mémoire. En cas de reconnaissance d'un franchissement du seuil mémorisé dans un sens correspondant à une possibilité d'embuage du parebrise, les moyens de traitement déclenchent une alarme dans l'habitacle du véhicule. Cette alarme peut être soit de type visuel (voyant lumineux), soit de type sonore (bruiteur).

Averti par l'alarme, l'un des passagers avant du véhicule doit alors entamer une procédure de désembuage, laquelle n'est pas automatisée comme dans le premier type de dispositif de désembuage décrit ci-dessus.

Cette procédure de désembuage consiste à régler trois paramètres de l'installation de chauffage et/ou climatisation, au niveau du boîtier de commande, à savoir : la vitesse de fonctionnement du ventilateur du groupe motoventilateur, la température de l'air destiné à désembuer le pare-brise et le positionnement du volet de dégivrage destiné à gérer le flux d'air chaud.

La mise en oeuvre d'une telle procédure est, d'une part, relativement longue, et d'autre part, elle entraîne la perte complète des réglages initiaux de l'installation de chauffage et/ou climatisation. De plus, le temps gagné lors de la détection automatique est perdu lors du réglage des paramètres de désembuage.

On connaît, par ailleurs, dans le domaine de l'aviation, un dispositif de désembuage de vitre, du type comprenant :
- des moyens de chauffage pour agir sur au moins une vitre du véhicule,
- des moyens de commande de ces moyens de chauffage,
- au moins un capteur agencé pour délivrer, sous forme de signaux électriques, une mesure représentative de la température de la vitre et/ou du degré d'hygrométrie,
- des moyens de traitement associés à une mémoire, et aptes à comparer ladite mesure à des données de seuil mémorisées, pour coopérer avec les moyens de commande.

Un tel dispositif de désembuage est décrit par la Demande de Brevet anglais GB-A-2 168 506.

Dans ce type de dispositif de désembuage, les moyens de chauffage du dispositif de désembuage sont indépendants des moyens de chauffage qui servent au chauffage et/ou à la climatisation de l'intérieur du poste de pilotage de l'avion. En conséquence, le problème de la mise en veille des réglages de ladite installation de chauffage et/ou climatisation ne se pose pas.

Dans un véhicule automobile, un tel dispositif de désembuage ne permettrait pas de résoudre le problème de la restauration des réglages de l'aérothermie de l'habitacle, sans recourir à des moyens de chauffage indépendants de l'installation de chauffage et/ou climatisation habituelle.

Une solution consisterait à implanter sur le pare-brise du véhicule un circuit électrique de chauffage couplé aux moyens de traitement. Mais les inconvénients majeurs d'une telle solution sont d'une part la perte importante de visibilité et d'autre part la gêne occasionnée pour le conducteur.

Or, si une parfaite visibilité n'est pas fondamentale dans un avion, elle l'est en revanche dans un véhicule automobile pour des raisons de trafic routier. L'adaptation du dispositif de désembuage aéronautique à un véhicule automobile nécessiterait donc l'implantation d'un second dispositif de chauffage puissant et réglable dans le compartiment moteur et/ou sous la planche de bord du véhicule, entre le conducteur et le passager avant, ce qui n'est pas envisageable pour des raisons d'encombrement.

En conséquence, un but de l'invention est de procurer un dispositif de désembuage de vitre du type défini en introduction, qui ne présente pas les inconvénients des dispositifs de désembuage de la technique antérieure.

L'invention propose à cet effet un dispositif de désembuage de vitre du type défini en introduction, tel que défini dans le préambule de la revendication 1 et connu de GB-A-2 168 506 dans lequel d'une première part les moyens de chauffage de la vitre font partie d'une installation de chauffage et/ou climatisation de l'habitacle du véhicule, laquelle installation est commandée par lesdits moyens de commande, d'une seconde part les moyens de traitement sont aptes à coopérer avec les moyens de commande sur la base de valeurs de réglage en cours de l'installation de chauffage et/ou climatisation, et d'une troisième part les moyens de traitement sont aptes, après avoir effectué ladite comparaison, à réagir :
* en cas de franchissement du seuil dans un sens, correspondant à un besoin de chauffage :
   - en stockant en mémoire une partie au moins des réglages en cours, en tant que réglages "initiaux",
   - en coopérant avec les moyens de commande sur la base de nouveaux réglages, établis selon une loi prédéterminée, fonction de l'amplitude du franchissement, et
* en cas de franchissement du seuil dans l'autre sens, à restaurer les moyens de commande dans lesdits réglages initiaux mémorisés, ce qui met fin au désembuage.

Ainsi, les moyens de traitement sont aptes, d'une première part, à déterminer s'il est nécessaire de chauffer la vitre pour éviter qu'elle ne s'embue, d'une seconde part, à stocker en mémoire une partie au moins des réglages en cours de l'installation de chauffage et/ou climatisation, lesquels sont relatifs à l'aérothermie de l'habitacle, et d'une troisième part, à régler les paramètres de chauffage de la vitre concernée, en fonction de la mesure délivrée par le capteur, et d'une quatrième part, à restaurer, lorsqu'ils le jugent nécessaire, les moyens de commande dans les réglages initiaux mémorisés.

On entend par réglages initiaux, les réglages en cours de l'aérothermie de l'habitacle juste avant que le désembuage ne soit décidé par les moyens de traitement.

Selon un mode de réalisation de l'invention, les moyens de traitement comprennent en outre des moyens de prétraitement aptes à effectuer un prétraitement des signaux électriques formant mesure, avant comparaison de celle-ci avec ledit seuil mémorisé.

Selon un mode de réalisation de l'invention, le prétraitement des signaux comprend un test sur l'intensité desdits signaux et/ou un filtrage radiofréquence propre à supprimer des informations parasites non issues du capteur.

De la sorte, étant donné, d'une part, le faible niveau des signaux délivrés par le capteur, et d'autre part, les émissions parasites de type radiofréquence qui environnent l'appareil, il est possible de filtrer les signaux en provenance du capteur afin d'éviter tout effet parasite extérieur.

De façon particulièrement avantageuse, le capteur est situé dans une partie supérieure de la vitre, de préférence dans le quart supérieur et à proximité d'un axe de symétrie séparant ladite vitre en deux parties symétriques.

Ainsi positionné, le capteur se trouve installé dans une zone qui est non seulement éloignée des bouches de désembuage destinées à délivrer un flux d'air chaud de désembuage qui pourrait influencer la mesure effectuée sur la vitre, mais encore en dehors de la zone d'influence des essuie-glace.

Dans un premier mode de réalisation de l'invention, le capteur est un capteur de "point de rosée" apte à délivrer une mesure représentative à la fois de la température et de l'humidité de l'air, et dans un second mode de réalisation de l'invention, le capteur comprend une sonde de température et une sonde d'humidité.

Ainsi, un capteur unique de très faible dimension suffit à déterminer les données de température et d'humidité indispensables à une régulation automatique efficace du dispositif de désembuage des vitres.

Dans la description qui suit, faite à titre d'exemple, on se réfère aux dessins annexés, sur lesquels :
- la figure 1 est une vue en coupe schématique du véhicule dans un plan médian comprenant l'axe longitudinal du véhicule;
- la figure 2 est une vue schématique du pare-brise du véhicule illustrant l'implantation du capteur;
- la figure 3 est une vue schématique de la glace arrière du véhicule illustrant l'implantation du capteur et d'un dispositif de chauffage;
- la figure 4 est un organigramme illustrant une procédure particulière de désembuage automatique, mettant en oeuvre le dispositif de désembuage selon l'invention; et
- la figure 5 est un diagramme illustrant les courbes de la masse d'eau par kilogramme d'air (MK), à l'intérieur de l'habitacle, en fonction de la température (T), d'une part pour le seuil d'embuage et d'autre part pour le seuil de point de rosée.

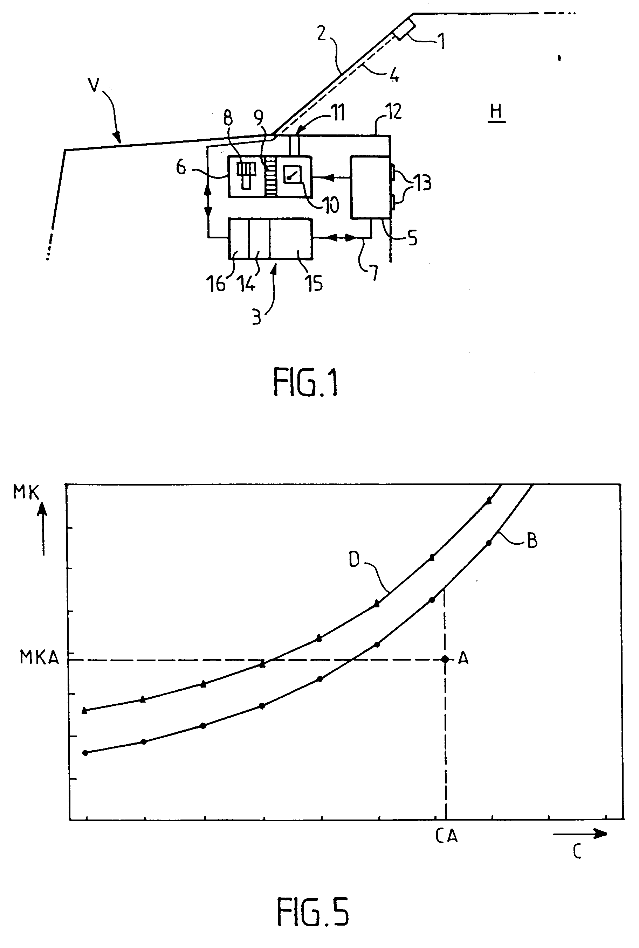

Le dispositif de désembuage automatique de vitre d'un véhicule automobile V, tel que représenté à la figure 1, comprend un capteur 1 collé sur la surface interne du pare-brise 2 du véhicule V, des moyens de traitement 3 connectés d'une part au capteur 1 par de premières liaisons électriques 4, et d'autre part à des moyens de commande 5 d'une installation de chauffage et/ou climatisation 6 du véhicule par de secondes liaisons électriques 7.

Cette installation de chauffage et/ou climatisation 6 comprend notamment un groupe moto-ventilateur 8 propre à délivrer un flux d'air au niveau d'un échangeur de chaleur 9, et un jeu de volets de distribution, dont un volet de désembuage 10, propre à régler le flux d'air chaud destiné à alimenter des bouches de désembuage 11 logées dans la planche de bord 12 du véhicule au niveau de la base inférieure du pare-brise 2.

Les moyens de commande 5 comprennent sur leur façade avant un jeu de boutons de réglage 13 destinés à commander les volets de distribution, le pulseur du groupe moto-ventilateur 8 et l'échangeur de chaleur 9, afin de gérer la vitesse, le volume, et la température de l'air destiné à alimenter l'ensemble des bouches de distribution logées à l'intérieur de l'habitacle H du véhicule.

Les volets du jeu de volets de distribution sont avantageusement pilotés par des actionneurs de type électromécanique ou pneumatique qui reçoivent leurs ordres des moyens de commande.

Il est donc possible de faire passer très rapidement un volet de l'état ouvert à l'état fermé, ainsi que de mémoriser son réglage à un instant donné, lequel est associé à des données qui peuvent être extraites des moyens de commande 5 par les moyens de traitement 3, lesquels comprennent à cet effet un microprocesseur 15 apte à lire les réglages en cours des moyens de commande et à les stocker dans une mémoire 14.

Par ailleurs, les moyens de traitement 3 comprennent également un module de prétraitement 16 destiné à prétraiter les signaux issus du capteur 1, et à les délivrer au microprocesseur 15 afin qu'il puisse les utiliser de façon efficace.

Ce module de prétraitement 16 comprend un circuit électronique d'amplification et de logique permettant de traiter les signaux électriques en provenance du capteur, pour les transformer en signaux logiques ou analogiques de haut niveau. Cela permet d'une part, d'amplifier l'intensité des signaux, et d'autre part de filtrer ces signaux afin qu'ils ne contiennent qu'un minimum d'informations parasites de type radiofréquence, lesquelles sont issues d'accessoires du véhicule ou de l'extérieur.

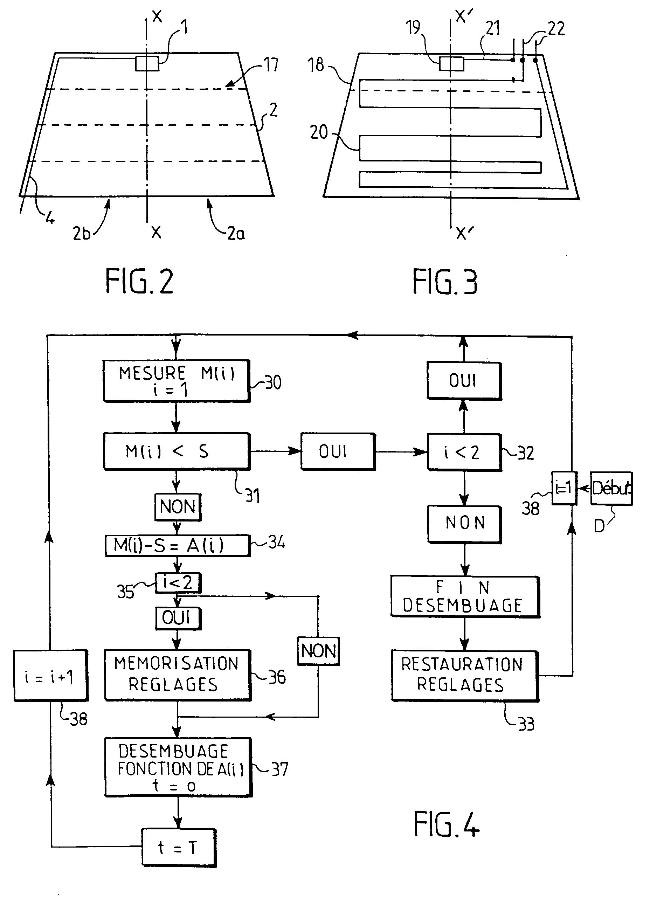

Pour décrire le capteur, on se réfère aux figures 2 et 3.

Le capteur 1, destiné à fournir des mesures, sous forme de signaux électriques, aux moyens de traitement 3 par l'intermédiaire de ses liaisons électriques 4, est, par exemple, collé dans une partie supérieure de la vitre à proximité d'un axe de symétrie XX séparant le pare-brise 2 en deux parties symétriques 2a et 2b. De préférence, le capteur 1 est collé dans le quart supérieur du pare-brise 2 en référence à une décomposition de ce pare-brise en quatre tranches horizontales définissant un quart inférieur, deux quarts médians et un quart supérieur 17.

Dans cette position, le capteur est avantageusement éloigné, d'une part, du flux d'air chaud qui débouche des bouches de désembuage 11, et d'autre part, du champ d'action des essuie-glace.

La colle utilisée pour maintenir en position fixe le capteur 1 sur le pare-brise 2 est une colle conductrice de chaleur, ce qui permet d'assurer une bonne liaison thermique avec le pare-brise 2, et donc une mesure efficace de la température de la surface interne du pare-brise 2.

L'invention ne se limite pas à ce type de capteur collé sur le pare-brise, mais elle s'applique tout aussi bien à un capteur intégré dans la structure dite triplex d'un pare-brise.

De même, on peut envisager d'équiper la glace arrière 18 du véhicule V d'un second capteur 19 destiné à délivrer des mesures aux moyens de traitement 3, lesquels peuvent être conçus pour autoriser le traitement en parallèle des mesures issues des capteurs implantés sur le pare-brise 2 et sur la glace arrière 18.

Pour chauffer la glace arrière 18 du véhicule, il est prévu, de façon particulièrement avantageuse, de coller sur celle-ci une résistance électrique de chauffage 20 formant circuit. Cette résistance de chauffage est commandée par les moyens de traitement 3, lesquels sont aptes à faire varier la puissance d'alimentation du circuit afin de contrôler l'intensité de l'effet Joule propre à faire varier la température au niveau de la glace arrière 18.

La connexion du capteur 19 et du circuit 20 est rendue possible grâce à des liaisons électriques respectivement 21 et 22.

Le capteur utilisé pour délivrer des mesures est de préférence un capteur de "point de rosée", apte à délivrer une mesure précise représentative à la fois de la température et de l'humidité de l'air.

Un simple capteur de température ne permet pas à lui seul de détecter un début de formation de buée.

On pourra par exemple utiliser un capteur du type de celui décrit dans la Demande de Brevet français FR-A-2 702 049. Un tel capteur utilise un ou plusieurs éléments Peltier dont les températures propres peuvent être gérées par effet Peltier grâce à un régulateur. Ce régulateur est propre à alimenter les éléments Peltier en courant alternatif d'une période choisie de telle sorte que ces éléments soient en fonction normal (hors buée) à proximité du point de rosée.

Lorsque le degré d'humidité et/ou la température varie sur les éléments Peltier, cela modifie leurs propriétés et influe sur la période choisie du courant d'alimentation. Pour ramener les éléments Peltier à proximité de leur point de rosée, le régulateur modifie leur température par effet Peltier.

Les moyens de traitement 3, qui sont connectés au régulateur, sont aptes à déduire des fluctuations de la période une mesure de la température et du degré d'humidité au niveau de la surface interne du pare-brise 2 ou de toute autre vitre équipée d'un capteur. Ceci est rendu possible par une table de correspondance stockée dans la mémoire 14.

Bien entendu, le capteur peut ne pas être un capteur de point de rosée, mais il peut comprendre en remplacement une sonde de température et une sonde d'humidité, chaque sonde étant apte à délivrer une mesure qui sera analysée par les moyens de traitement 3. Ces moyens de traitement 3 correleront ensuite les mesures de température et d'humidité reçues à un instant donné afin d'en déduire des données qui seront analysées.

Dans la suite de la description, on inclut dans la définition du capteur, son régulateur de courant, qui est en fait l'élément qui fournit la mesure.

On se réfère maintenant aux figures 4 et 5 pour décrire un exemple de procédure de désembuage utilisant le dispositif de désembuage selon l'invention.

En condition normale de fonctionnement, le dispositif de désembuage n'a pas lieu de fonctionner. Cet état correspond sur le diagramme de la figure 5 à un point A de coordonnées CA et MKA. Sur ce diagramme, l'axe des abscisses représente la température (C) et l'axe des ordonnées représente la masse d'eau par kilogramme d'air (MK). Ce point A se situe en dessous de la courbe B qui représente un premier seuil au-delà duquel le pare-brise est embué. Plus l'on s'élève au-dessus de cette courbe B, car la température baisse et/ou le degré d'humidité de l'air contenu dans l'habitacle H augmente, plus le taux d'embuage du pare-brise 2, ou plus généralement des vitres de l'habitacle, devient grand.

Ce taux d'embuage peut augmenter jusqu'à un second seuil qui est représenté par la seconde courbe D, seuil dit de point de rosée au-delà duquel la buée se transforme en eau.

Le but d'un dispositif de désembuage automatique est donc de maintenir la surface interne du pare-brise 2 dans des conditions de température et d'humidité représentées par un point comme le point A, à savoir en dessous de la courbe seuil B.

De telles courbes de seuil sont mémorisées sous forme de données de seuil dans la mémoire 14.

Pour parvenir à ce résultat, le dispositif de désembuage doit effectuer, par exemple, une procédure telle que celle décrite ci-après.

Le début d'une procédure commence à l'étape D. Les moyens de traitement 3, qui interrogent de façon périodique le capteur 1, font passer un compteur de mesure 38 de sa valeur initiale i=0 à la valeur i=1, et passent à l'étape 30, où ils interrogent le capteur 1 qui effectue alors une mesure représentative à la fois de la température et de l'humidité au niveau du pare-brise 2. Cette mesure est reçue au niveau des moyens de traitement 3 par le module de prétraitement 16, lequel amplifie dans un premier temps les signaux électriques reçus, puis dans un second temps les filtre afin que les informations contenues dans le message ne soient relatives qu'à la mesure effectuée par le capteur.

Les signaux électriques prétraités sont dirigés vers le microprocesseur 15 où ils sont transformés en données de mesure M(i). Puis, à l'étape 31, la mesure M est comparée aux données de seuil représentant la courbe B, lesquelles sont stockées dans la mémoire 14. Le test réalisé à l'étape 31 consiste donc à savoir si la mesure M(i) est inférieure ou non au seuil S. Il existe deux réponses possibles.
1) Si la réponse est oui, alors, à l'étape 32, le microprocesseur 15 effectue un second test qui consiste à savoir si la mesure en cours de traitement est une première mesure. Il détermine ainsi si le désembuage est déjà en fonctionnement. En conséquence, à l'étape 32, on effectue un test sur l'indice de la mesure M.
   Deux hypothèses se présentent alors.
   a) Si cette mesure est effectivement la première (i=1), alors on est dans la situation où le désembuage n'est pas en fonctionnement et qu'il n'y a pas lieu de le faire. En conséquence, les moyens de traitement sont prêts à interroger de nouveau le capteur 1 pour recommencer la procédure à l'étape 30.
   b) En revanche, si le test effectué à l'étape 32 est négatif (i≥2), alors les moyens de traitement savent que la procédure de désembuage est déjà en fonctionnement. Or, étant donné qu'il n'y a plus lieu de désembuer le pare-brise, les moyens de traitement n'ont plus qu'à terminer la procédure de désembuage en demandant aux moyens de commande de fermer, par exemple, le volet de désembuage, puis en restaurant, à l'étape 33, les moyens de commande 5 dans les réglages initiaux mémorisés dans la mémoire 14, ce qui permet de revenir de façon totalement automatique aux réglages de l'installation de chauffage et/ou climatisation 6, lesquels étaient en cours juste avant le commencement de la procédure de désembuage.

   On réinitialise alors le compteur de mesure 38, en le mettant à la valeur 0.
   Les moyens de traitement 15 sont alors prêts à commander une nouvelle mesure au capteur 1, ce qui nous ramène à l'étape de départ D.
2) Si la réponse au test effectué à l'étape 31 est non, alors la mesure M(i) est supérieure au seuil S. Il y a donc franchissement de seuil dans le sens correspondant à un besoin de chauffage, et les moyens de traitement savent qu'il faut mettre en oeuvre les moyens de chauffage 8, 9, 10, ou alors de les poursuivre selon des réglages identiques aux précédents ou non.
   Le paramétrage des moyens de chauffage nécessite de savoir si le franchissement du seuil est important ou non. En conséquence, à l'étape 34 le microprocesseur 15 effectue la soustraction entre la mesure M(i) et le seuil S, ce qui donne une valeur A(i) représentant l'amplitude du franchissement du seuil S. Puis, il effectue à l'étape 35 un test sur l'indice i de la mesure M(i) afin de déterminer si le désembuage est déjà en fonctionnement, ce qui correspond au cas i > 1. Deux hypothèses se présentent alors.
   a) Si i < 2, alors le désembuage n'est pas encore en fonctionnement, et il faut mémoriser les réglages en cours des moyens de commande 5. Le microprocesseur 15 va donc lire les réglages qui assurent à cet instant de lecture le confort aérothermique à l'intérieur de l'habitacle H.
      Ces réglages sont alors mémorisés par les moyens de traitement 3 dans la mémoire 14, dans un registre prévu à cet effet, ce qui constitue l'étape 36. On passe alors à l'étape 37, laquelle sera décrite plus loin.
   b) Si i > 1, alors le désembuage est déjà en fonctionnement, et il n'y a pas lieu de mémoriser les réglages des moyens de commande 5 puisqu'ils l'ont été lors d'une procédure précédente. On passe alors directement à l'étape 37.

Après le test sur l'indice i, l'amplitude A(i) mesurée à l'étape 34 est alors transformée selon une loi prédéterminée en données de réglages qui sont adressées aux moyens de commande 5.

De la sorte, il est possible d'effectuer un chauffage du pare-brise 2 qui est approprié aux conditions de température et d'humidité relevées à l'instant de la mesure. Cela permet donc d'effectuer une réponse adaptée aux besoins.

A l'étape 37, le chauffage du pare-brise 2 est prévu pour durer une période t sensiblement équivalente à la période T qui correspond à l'intervalle de temps prévu entre deux mesures du capteur 1.

Lorsque la période de temps écoulée est sensiblement égale à cette période T, les moyens de traitement 3 incrémentent d'une unité, le numéro de la mesure contenu dans le compteur de mesure 38, puis ils commandent au capteur 1 d'effectuer une nouvelle mesure, ce qui ramène à l'étape 30.

Ainsi, à chaque lancement de la procédure de désembuage, les paramètres du désembuage peuvent être ajustés. Cette procédure peut être recommencée autant de fois que cela est nécessaire.

Bien évidemment, on peut prévoir une double procédure en parallèle pour traiter le désembuage à la fois du pare-brise 2 grâce au capteur 1 et de la glace arrière 18 grâce au capteur 19. Dans ce cas, les données de seuil des deux vitres ne sont pas forcément les mêmes.

Dans cette hypothèse, le chauffage de la glace arrière 18 n'est pas assuré par l'installation de chauffage et/ou climatisation logée au moins en partie dans le compartiment moteur du véhicule, laquelle distribue de l'air chaud au niveau des bouches de dégivrage 11, mais par le circuit électrique 20.

Contrairement aux moyens de chauffage du pare-brise 2, les moyens de chauffage de la glace arrière 18 ne sont paramétrable que par un unique paramètre, à savoir la puissance électrique fournie au circuit 20.

En conséquence, le désembuage de la glace arrière 18 commandé par l'étape 37 de la procédure décrite ci-dessus résulte d'une simple correspondance entre l'amplitude du franchissement A(i) et la puissance électrique nécessaire au circuit 20.

Le dispositif de désembuage selon l'invention ne saurait être utilisé que selon la procédure décrite ci-dessus. Toute autre procédure du même type qui aboutirait à la mise en oeuvre des éléments du dispositif de désembuage selon l'invention peut être envisagée.

Par ailleurs, on pourrait envisager d'utiliser d'autres types de capteur aptes à délivrer des mesures représentatives de la température et de l'humidité.

## Revendications

1. Dispositif de désembuage de vitres, notamment d'un véhicule automobile, du type comprenant :
- des moyens de chauffage (6, 8, 9, 10, 20) pour agir sur au moins une vitre (2, 18) du véhicule (V),
- des moyens de commande (5) de ces moyens de chauffage,
- au moins un capteur (1, 19) agencé pour délivrer, sous forme de signaux électriques, une mesure (M) représentative de la température de la vitre (2, 18) et/ou du degré d'hygrométrie,
- des moyens de traitement (3) associés à une mémoire (14), et aptes à comparer ladite mesure (M) à des données de seuil (S) mémorisées, pour coopérer avec les moyens de commande (5),
caractérisé en ce que les moyens de chauffage de la vitre font partie d'une installation de chauffage et/ou climatisation (6) de l'habitacle (H) du véhicule (V), laquelle installation est commandée par lesdits moyens de commande (5),
en ce que les moyens de traitement (3) sont aptes à coopérer avec les moyens de commande (5) sur la base de valeurs de réglage en cours de l'installation de chauffage et/ou climatisation (6), et en ce qu'après avoir effectué ladite comparaison, les moyens de traitement (3) sont aptes à réagir:
* en cas de franchissement du seuil (S) dans un sens, correspondant à un besoin de chauffage:
- en stockant en mémoire (14) une partie au moins des réglages en cours, en tant que réglages "initiaux",
- en coopérant avec les moyens de commande (5) sur la base de nouveaux réglages, établis selon une loi prédéterminée, fonction de l'amplitude (A) du franchissement, et
* en cas de franchissement du seuil (S) dans l'autre sens, à restaurer les moyens de commande (5) dans lesdits réglages initiaux mémorisés, ce qui met fin au désembuage.

2. Dispositif selon la revendication 1, caractérisé en ce que les moyens de traitement (3) comprennent en outre des moyens de pré-traitement (16) aptes à effectuer un prétraitement des signaux électriques formant mesure (M), avant comparaison de celle-ci avec ledit seuil mémorisé (S).

3. Dispositif selon la revendication 2, caractérisé en ce que le pré-traitement des signaux comprend un test sur l'intensité desdits signaux et/ou un filtrage radiofréquence propre à supprimer des informations parasites non issues du capteur (1, 19).

4. Dispositif selon l'une des revendications 1 à 3, caractérisé en ce que le capteur (1, 19) est situé dans une partie supérieure de la vitre, de préférence dans le quart supérieur (17) et à proximité d'un axe de symétrie (XX) séparant ladite vitre en deux parties symétriques (2a et 2b).

5. Dispositif selon l'une des revendications 1 à 4, caractérisé en ce que le capteur (1) est un capteur de "point de rosée" apte à délivrer une mesure représentative à la fois de la température et de l'humidité de l'air au voisinage de la vitre (2, 18).

6. Dispositif selon l'une des revendications 1 à 4, caractérisé en ce que le capteur comprend une sonde de température et une sonde d'humidité.

7. Dispositif selon l'une des revendications 1 à 6, caractérisé en ce que le capteur (1, 19) est collé sur la vitre à l'intérieur de l'habitacle du véhicule.

8. Dispositif selon la revendication 6, caractérisé en ce que la sonde de température est intégrée dans la structure de la vitre.

9. Dispositif selon la revendication 6, caractérisé en ce que la sonde d'humidité est collée sur la vitre à l'intérieur de l'habitacle du véhicule.

10. Dispositif selon l'une des revendications 1 à 9, caractérisé en ce qu'il comprend un autre capteur (19) agencé pour délivrer, sous forme de signaux électriques, une mesure représentative de la température d'une autre vitre (18),
en ce que les moyens de chauffage comprennent également un circuit électrique (20), de type résistance chauffante capable d'effet thermoélectrique, logé sur l'autre vitre (18) du véhicule, et
en ce que les moyens de traitement (3) sont également aptes à comparer ladite mesure à d'autres données de seuil mémorisées dans la mémoire (14), lesquelles autres données sont relatives à l'autre vitre (18), et à coopérer avec le circuit électrique (20) en fonction de ladite comparaison.

## Claims

1. Apparatus for demisting glass panels, especially for a motor vehicle, of the type comprising:
- heating means (6, 8, 9, 10, 20) for acting on at least one glass panel (2, 18) of the vehicle (V),
- control means (5) for the said heating means, at least one sensor (1, 19) arranged to deliver, in the form of electrical signals, a measurement (M) representing the temperature of the glass (2, 18) and/or the moisture level,
- processing means (3) associated with a memory (14) and adapted to compare the said measurement (M) with memorised threshold data (S), for cooperation with the control means (5),
characterised in that the means for heating the glass are part of a heating and/or air conditioning installation (6) for the cabin (H) of the vehicle (V), which installation is controlled by the said control means (5),
in that the processing means (3) are adapted to cooperate with the control means (5) on the basis of values of current regulation of the heating and/or air conditioning installation (6), and in that, after the said comparison has been effected, the processing means (3) are adapted to react:
* in the event of the threshold (S) being in a sense corresponding to a need for heating:
- by storing in the memory (14) at least part of the current adjustments, as "initial" adjustments,
- by cooperating with the control means (5) on the basis of new adjustments, established according to a predetermined law, which are a function of the amplitude (A) of the infringement, and
* in the event of infringement of the threshold (S) in the other sense, by restoring the control means (5) into the said memorised initial adjustments, which terminates the demisting operation.

2. Apparatus according to Claim 1, characterised in that the processing means (3) further include preprocessing means (16) adapted to carry out a preprocessing operation on the electrical measurement signals (M), before comparison of the latter with the said memorised threshold (S).

3. Apparatus according to Claim 2, characterised in that the preprocessing of the signals comprises a test as to the intensity of the said signals and/or a radio frequency filtering operation for suppressing parasitic information not issued by the sensor (1, 19).

4. Apparatus according to one of Claims 1 to 3, characterised in that the sensor (1, 19) is situated in an upper part of the glass panel, preferably in the top quarter (17), and close to an axis of symmetry (XX) dividing the said glass panel into two symmetrical portions (2a and 2b).

5. Apparatus according to one of Claims 1 to 4, characterised in that the sensor (1) is a "dew point" sensor for delivering a measurement which represents both the temperature and the humidity of the air in the vicinity of the glass panel (2, 18).

6. Apparatus according to one of Claims 1 to 4, characterised in that the sensor comprises a temperature transducer and a humidity transducer.

7. Apparatus according to one of Claims 1 to 6, characterised in that the sensor (1, 19) is adhesively attached on the glass panel, within the cabin of the vehicle.

8. Apparatus according to Claim 6, characterised in that the temperature transducer is incorporated in the structure of the glass panel.

9. Apparatus according to Claim 6, characterised in that the humidity transducer is adhesively attached on the glass panel, within the cabin of the vehicle.

10. Apparatus according to one of Claims 1 to 9, characterised in that it includes a further sensor (19) which is arranged to deliver, in the form of electrical signals, a measurement representing the temperature of another glass panel (18),
in that the heating means further include an electrical circuit (20) of the heating resistance type capable of thermoelectric effect, mounted on the other glass panel (18) of the vehicle, and
in that the processing means (3) are further adapted to compare the said measurement with further threshold data memorised in the memory (14), which further data relate to the other glass panel (18), and to cooperate with the electrical circuit (20) as a function of the said comparison.

## Patentansprüche

1. Vorrichtung zur Beschlagfreihaltung von Scheiben, insbesondere eines Kraftfahrzeugs, umfassend:
- Heizungsmittel (6, 8, 9, 10, 20), um auf mindestens eine Scheibe (2, 18) des Fahrzeugs (V) einzuwirken,
- Betätigungsmittel (5) für diese Heizungsmittel,
- mindestens einen Meßfühler (1, 19), der so angeordnet ist, daß er in Form von elektrischen Signalen einen für die Temperatur der Scheibe (2, 18) und/oder für die relative Luftfeuchtigkeit repräsentativen Meßwert (M) liefern kann,
- Verarbeitungsmittel (3), die mit einem Speicher (14) verbunden sind und den besagten Meßwert (M) mit abgespeicherten Schwellenwertdaten (S) vergleichen können, um mit den Betätigungsmitteln (5) zusammenzuwirken,
**dadurch gekennzeichnet**, daß die Heizungsmittel für die Heckscheibe Bestandteil einer Heizungs- und/oder Klimaanlage (6) für den Fahrgastraum (H) des Fahrzeugs (V) sind, wobei diese Anlage durch die besagten Betätigungsmittel (5) gesteuert wird,
daß die Verarbeitungsmittel (3) mit den Betätigungsmitteln (5) auf der Grundlage von aktuellen Einstellwerten der Heizungs- und/oder Klimaanlage (6) zusammenwirken können, und daß die Verarbeitungsmittel (3) nach der Durchführung des besagten Vergleichs reagieren können, indem sie:
* bei Überschreitung des Schwellenwerts (S) in einer Richtung, die einem Heizungsbedarf entspricht:
- zumindest einen Teil der aktuellen Einstellungen als "Ausgangs"-Einstellungen im Speicher (14) abspeichern,
- mit den Betätigungsmitteln (5) auf der Grundlage neuer Einstellungen zusammenwirken, die nach einem vorbestimmten Verlauf in Abhängig von der Größe (A) der Überschreitung bestimmt werden, und
* bei Überschreitung des Schwellenwerts (S) in der anderen Richtung die Betätigungsmittel (5) mit den besagten abgespeicherten Ausgangseinstellungen wiedereinschalten, wodurch die Beschlagfreihaltung beendet wird.

2. Vorrichtung nach Anspruch 1, **dadurch gekennzeichnet**, daß die Verarbeitungsmittel (3) außerdem Vorverarbeitungsmittel (16) umfassen, die eine Vorverarbeitung der elektrischen Signale, die einen Meßwert (M) darstellen, vor dessen Vergleich mit dem besagten gespeicherten Schwellenwert (S) ausführen können.

3. Vorrichtung nach Anspruch 2, **dadurch gekennzeichnet**, daß die Vorverarbeitung der Signale einen Test zur Stärke der besagten Signale und/oder eine Hochfrequenzfilterung umfaßt, um die nicht vom Meßfühler (1, 19) stammenden Störinformationen zu unterdrücken.

4. Vorrichtung nach einem der Ansprüche 1 bis 3, **dadurch gekennzeichnet**, daß der Meßfühler (1, 19) in einem oberen Teil der Scheibe, vorzugsweise im oberen Viertel (17) und in der Nähe einer Symmetrieachse (XX) angeordnet ist, die die besagte Scheibe in zwei symmetrische Teile (2a und 2b) unterteilt.

5. Vorrichtung nach einem der Ansprüche 1 bis 4, **dadurch gekennzeichnet**, daß es sich bei dem Meßfühler (1) um einen "Taupunkt"-Fühler handelt, der einen Meßwert liefern kann, der sowohl für die Temperatur als auch für die Feuchtigkeit der Luft in der Nähe der Scheibe (2, 18) repräsentativ ist.

6. Vorrichtung nach einem der Ansprüche 1 bis 4, **dadurch gekennzeichnet**, daß der Meßfühler einen Temperatursensor und einen Feuchtigkeitssensor umfaßt.

7. Vorrichtung nach einem der Ansprüche 1 bis 6, **dadurch gekennzeichnet**, daß der Meßfühler (1, 19) an der Scheibe im Innern des Fahrgastraums des Fahrzeugs aufgeklebt ist.

8. Vorrichtung nach Anspruch 6, **dadurch gekennzeichnet**, daß der Temperatursensor in die Struktur der Scheibe integriert ist.

9. Vorrichtung nach Anspruch 6, **dadurch gekennzeichnet**, daß der Feuchtigkeitssensor an der Scheibe im Innern des Fahrgastraums des Fahrzeugs aufgeklebt ist.

10. Vorrichtung nach einem der Ansprüche 1 bis 9,**dadurch gekennzeichnet**, daß sie einen anderen Meßfühler (19) umfaßt, der so angeordnet ist, daß er in Form von elektrischen Signalen einen für die Temperatur einer anderen Scheibe (18) repräsentativen Meßwert liefern kann,
**dadurch gekennzeichnet,** daß die Heizungsmittel außerdem einen elektrischen Stromkreis (20) des Typs Heizwiderstand umfassen, der einen thermoelektrischen Effekt erzeugen kann und der an der anderen Scheibe (18) des Fahrzeugs angebracht ist, und
daß die Verarbeitungsmittel (3) außerdem in der Lage sind, den besagten Meßwert mit anderen Schwellenwertdaten zu vergleichen, die im Speicher (14) abgespeichert sind, wobei sich diese anderen Daten auf die andere Scheibe (18) beziehen, und in Abhängigkeit von dem besagten Vergleich mit dem elektrischen Stromkreis (20) zusammenzuwirken.
